# EUROPEAN PATENT APPLICATION

(11) **EP 1 858 273 A2**
(43) Date of publication of application: **21.11.2007**
(21) Application number: 07115076.7
(22) Date of filing: 29.07.2001
(51) Int. Cl.: H04Q 7/24

(54) **Interface unit for connecting a cellular network and the public internet**

(62) Divisional of application: 01961053.4
(71) Applicant: Barkan, Yuval, 49935 Kefar Sirkin (IL)
(72) Inventor: Barkan, Yuval, 49935 Kefar Sirkin (IL)
(74) Representative: Mittler, Enrico

(57) **Abstract**

According to the present invention, an interface device (32) is inserted to facilitate connecting authorized entities (41,42) to the existing cellular network (221-224) via the public internet (24). According to an embodiment, said authorized entities (41,42) are add-on base stations.

## Description

### Technical Field

The invention concerns systems and methods for improving existing cellular networks by the addition of add-on base stations. The invention concerns in particular add-on base stations that can be installed by independent operators.

### Background Art

At present, it is difficult to install new base stations for the purpose of expanding cellular networks. The new base station installation is especially problematic in highly populated urban areas.

Base stations are used in cellular systems for establishing RF links between mobile users and the cellular wired network. The base stations may use a relatively high transmit power, to achieve a reliable link This high RF power may be harmful to people nearby. Moreover, it may interfere with other electronic equipment, Sometimes, people object to the installation of base stations in populated areas.

Another patent application, PCT/IL 99/00438, disclosed an add-on base station with means for its addition to existing cellular network, by independent operators.
These public-owned and public-operated base stations complement a cellular network, thus increasing the density of base stations to provide better coverage with smaller cells.

The present disclosure addresses, inter alia, the problems of integrating the new base station within the existing cellular network.

The cellular infrastructure is comprised of dedicated technology that is still more expensive to use than other communication technologies, like telephony or data networks.

For example, the cost of acquisition and deployment of infrastructure of cellular network of a single operator in Israel (Partner) that today serves one million subscribers, is estimated at around US$ 1 Billion. And the cost of use is usually few order of magnitudes more than land-based telephony.

Within the cellular infrastructure, the present invention addresses an important component, the cell, serviced by the base station. This is the component that communicates with the mobile telephones. In order to provide adequate service, the cells have to be deployed in an array dense enough to handle the movement of the users while engaged in telephone conversation.

The cells are usually connected to the rest of the infrastructure components by dedicated communication links.

Cells come in different coverage, different capacity, different complexity and, obviously, different cost The cost associated with the real estate of the site, wiring, maintenance of the site, etc., comprises a significant portion of the expenses incurred by the cellular operators.

There are two fundamental requirements from a cellular operator: service area coverage and volume of calls the network can serve. In urban areas numerous cells are needed in order to provide both improved area coverage and larger volume of calls. The cost involved with the large number of such cells is a limiting factor to rapid growth of cellular services.

It is an objective of the new system and method to alleviate the financial burden on the cellular operator, that is associated with the expansion of the cellular infrastructure.

At present, cellular systems are centralized - the same firm installs and operates the various base stations in the system. Although there may be two firms operating in the same area, these are usually large firms. Thus, the cellular market is usually serviced by a monopoly or an oligopoly.

It is an objective of the present invention to facilitate the addition of base stations by independent firms and/or individuals. Thus, true free enterprise is brought to the cellular telecommunications arena.

This novel structure may require a self-organizing system, capable of providing effective service despite the lack of central planning. It is another objective of the present invention to solve this problem.

Another practical problem is how to add base stations in existing cellular network, and using the same mobile phones.

At present, a cellular system comprises a deployment of mostly nonoverlapping cells with a measure of frequency reuse. These cells are usually depicted as octagons located side by side.

As the network grows, one large cell may be replaced by several smaller cells, however the basic underlying principle of operation remains unchanged: terrain coverage with a plurality of nonoverlapping cells. Cell overlapping exists, however, on a smaller scale and especially in cell's fringe area so there could be continuity of service.

The new concept allows the formation of smaller cells within an existing cell.
This novel structure and method can increase the channel capacity, together with improved coverage of a desired area.

Integration of randomly deployed cells within a cellular network: A cellular network, such as GSM for example, is carefully planned before deployment. The specifics of planning, such as the data regarding location of cells and the allocation of frequencies to cells, are fed into the network components to be used in operational mode.

The cellular design was designed from the outset to be as centralized as possible, in planning, operation and design A new design that has to work alongside such centralized systems has to overcome almost insurmountable hurdles to come up with a consistent and operational outcome.

In the novel approach, it is required to integrate cells to a cellular network at random locations and with no pre-planned operating frequencies and still provide joint service by both the cellular cells and randomly deployed cells to customers in the same area.

The RF (Radio Frequency) aspect is an important consideration in the integration of new cells.
Considering the RF bandwidth scarcity and its extreme cost, the difficulty of attaining good RF coverage in urban environment can be appreciated. It also relates to the complex planning and design aimed at improving reception quality and reducing interference.

These issues constitute major design constraints that are more easily coped with in a centralized, highly planned system and service operation than in non-central, unplanned scenario.

Trying to implement such a new concept in existing cellular network leads to difficult problems.
For example, how to add small cells - there is the problem of dual or even a multiple cell coverage of an area, with two or more base stations covering a specific area. If there is overlap, then for each mobile there is a complex situation, of possible communication with two or more stations, as well as a possible interaction between the base stations themselves.

Considering there are a plurality of mobiles in the area, this is a complex problem indeed. If cells belong to different location areas, then there can be a large amount of location area updates.

There is the control problem, relating to mobile phones migrating to the new small cells.

Furthermore, there is the problem of controlling the transmit power and frequency.
Cellular base stations, according, for example, to the GSM specifications, must emit radiation at all times regardless of the existence actual traffic, Such transmissions might interfere with other cellular transmission carrying real traffic or control and thus reduce reception quality.

Moreover, this may also reduce the RF utilization. In addition to the interference effect, radiation might have negative health impact on humans, which is highly debatable, and excessive radiation that serves no actual traffic seem non-desirable in populated areas.

There is the problem of gradual improvement, natural growth adapted to user's needs, and also taking into account the existing cellular network.

If small cells are created, then there is the problem of many handovers over a short time period - undesired workload on the cellular, system, Worse still, a mobile has to announce its location even if offline, to enable the system to locate it for incoming calls. The problem is that offline mobiles do not pay for all this activity, as there is no call in progress. Moreover, there may be many phones offline in any cell, so their movements about may create lots of unprofitable activity.

It is an objective of the present invention to facilitate the installation and expansion of distributed cellular networks, especially in highly populated urban areas.

Another problem in cellular systems is the relatively high transmitted power of mobile phones.

It is another objective of the present invention to facilitate the improvement of existing cellular networks by the addition of add-on base stations.

### Disclosure of Invention

It is an object of the present invention to provide a system and method that facilitate the expansion of distributed cellular networks, especially in developed and highly populated urban areas, using a structure and method implemented with add-on base stations.

The novel structure and method may allow the public at large to participate in providing telecommunication services.

According to the invention, several aspects of the novel system are disclosed.
1. System growth, integration within a cellular system of a plurality of new, small cells. A plurality of new cells is created within an existing, larger cell. A practical embodiment using GSM as an example is provided.
   Compatibility: A mobile phone can connect both with the original base station (large cell) and the new base station (smaller cell within the existing large call).
   Each new cell can be at a random location, in an unplanned manner. A migration path is defined, to allow gradual location coverage Configuration Stages A to D are defined and detailed, illustrating the geographical coverage of a desired area.
2. System Implementation -- an embodiment of a structure and operation that may be used to implement gradual coverage and migration to new cells, as detailed above.
   Structure of the new system, with examples of embodiments and the migration path, including details of the connection and integration of a microcell within cellular (GSM) system, both at low level and at high level in the cellular network.
3. Methods of operation - method of integration, coexistence, frequency allocation, conditional beacon activation, location finding and reporting, group control, LA (Location Area) of cells and handover. Further, methods for switching of a new cells' calls, replacement of original cell, operation of a cell within cell and replacement of inactive or defective new cell are disclosed.
   The methods allow for a gradual improvement, natural growth adapted to a network's needs, and also taking into account the characteristics of an existing cellular network.
   Robust operation method is disclosed, to address the problem of a cell being inactive for various reasons, inter alia.
4. New cell structure - a new base station with transmitters, receivers and a controller, in a structure adapted to the novel system and method.
   It includes two auxiliary receivers or more, a controller to listen and take control, beacon control, adaptability, radiation emission control, location finding and control. A modular structure is upgradeable all the way up from Configuration A to C or D, to allow the connection and integration of a new cell within a cellular (GSM) system.
5. Other components of the novel system - including the IU1 (Interface Unit 1), MCCIU (Which is a novel central computer and switching controller), the network, adaptation to Solsa (Which is a new GSM mechanism that allows a mobile to park in a subset of cells, almost regardless of the reception level),

The technology in the present disclosure may be used for the transmission of voice, data, multimedia or a combination thereof

Further objects, advantages and other features of the present invention will become obvious to those skilled in the art upon reading the disclosure set forth hereinafter.

### Brief Description of Drawings

The invention will now be described by way of example and with reference to the accompanying drawings in which:
Fig. 1 illustrates the geographical coverage of cells in Stage A
Fig. 2 illustrates the geographical coverage of cells in Stage B
Fig. 3 illustrates the geographical coverage of cells in Stage B+Solsa
Fig. 4 illustrates the geographical coverage of cells in Stage C
Fig. 5 illustrates the geographical coverage of cells in Stage D
Fig. 6 details the new microcell integration during Stage A
Fig. 7 details the new microcell integration during Stage B
Fig. 8 details the new microcell integration during Stage B+Solsa
Fig, 9 details the new microcell integration during Stage C
Fig. 10 details the structure and operation of a new microcell base station.
Fig. 11 details the functional structure of a novel base station
Fig. 12 details another embodiment of the base station
Fig. 13 illustrates the physical structure of a base station.
Fig. 14 details a cellular to cellular link
Fig. 15 details a cellular to regular phone link
Fig. 16 details a link to an IP phone

### Modes for Carrying out the Invention

A preferred embodiment of the present invention will now be described by way of example and with reference to the accompanying drawings.

### Abbreviations

A-MCCIU device adapted for Stage A operation
AFU Additional Functions Unit
B-MCCIU MCClU device adapted for Stage B operation
BS Base Station
BSC Base Station Controller
BTS Base Transceiver Station
C-MCClU MCCIU device adapted for Stage C operation
GMSC Gateway MSC Controller
GSM Global System for Mobile Telecommunications
HLR Home Location Register
IP Internet Protocol network
IU1 Interface Unit No. 1
LAN Local Area Network
MCCIU Micro Cell Central Integration Unit
MSC Mobile Switching Center
RF Radio Frequency
SACCH Slow Associated Control Channel

The present disclosure details a novel base station with means for its addition to an existing cellular network, as well as its integration within the cellular network.

Throughout the present disclosure, the term "microcell" is used to indicate a small cell that is serviced by the new base station, which is described in the present disclosure. The new base station may be provided by an entity which is independent of the original cellular system.

### 1. System growth and integration method

A cellular system growth is achieved with the integration of a plurality of new microcells within the cellular system.
A plurality of new cells is created within an existing, larger cell. A practical embodiment using GSM as an example is provided.

Dual reception method: a mobile phone can connect either with the original base station (large cell) or the new base station (smaller cell within the existing large cell).

The novel system and method allows for the integration of randomly deployed cells with a GSM network. The original cellular network, such as GSM, is carefully planned before deployment. The specifics of planning, including the data regarding location of cells and the allocation of frequencies to cells, is fed into the network components to be used in operational mode.

The novel approach, however, enables to integrate cells to a GSM network at random locations and with no pre-planned operating frequencies and still provide joint service by both GSM cells and randomly deployed cells to customers in the same area Each new cell can be at a random location, unplanned.

A migration path is defined, to allow gradual diffusion of the new microcells, for gradual cells location coverage.
Configuration Stages A to D are defined and detailed, illustrating the geographical coverage of a desired area.

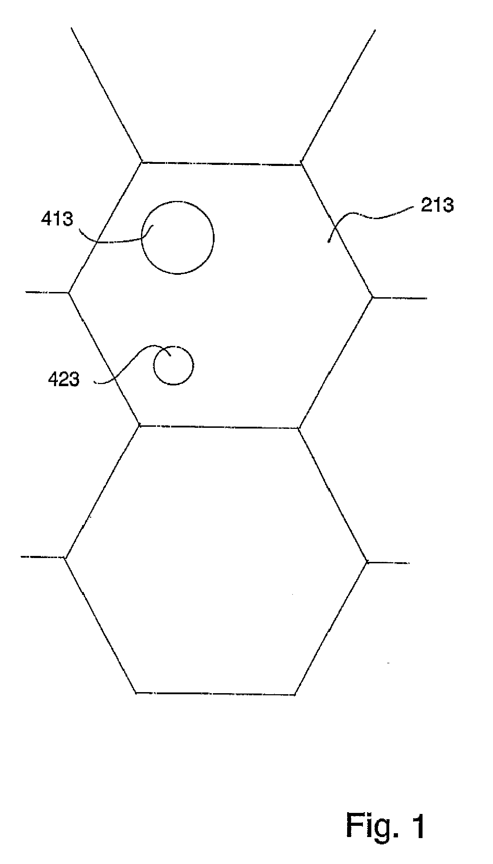

Fig. 1 illustrates the geographical coverage of cells during Stage A. A new cell is contained within an existing cell of a cellular network. In the example as illustrated, new microcells 413, 423 can be created by independent operators, an installation within an existing cell 213. The new microcells 413,423 are covered with the new base stations 41, 42 (see Fig, 6 below).

ln Stage A, there are a few microcells within an existing cell.

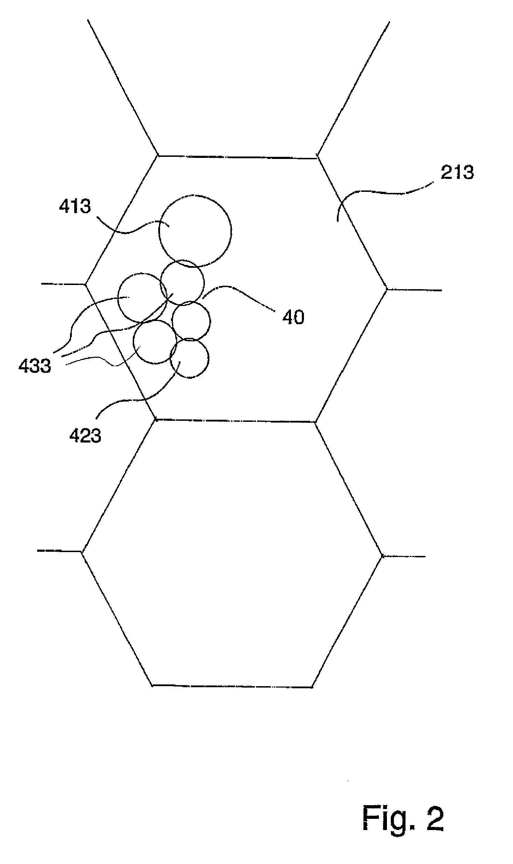

This is the first stage in the migration path, from a few additional microcells (Stage A), to a complete coverage of the area with the new microcells (Stage C) and Stage D - see also Figs. 2 to 4.

In Stage B, there are a cluster of microcells, which can be defined as a new cell or an independent LA. There is a larger area covered by that cluster, a contour can be defined that is mostly covered by these microcells.

Fig. 2 illustrates the geographical coverage of cells during Stage B. In existing cell 213, a plurality of new microcells 433 are created, in addition to the new microcells 413, 428.

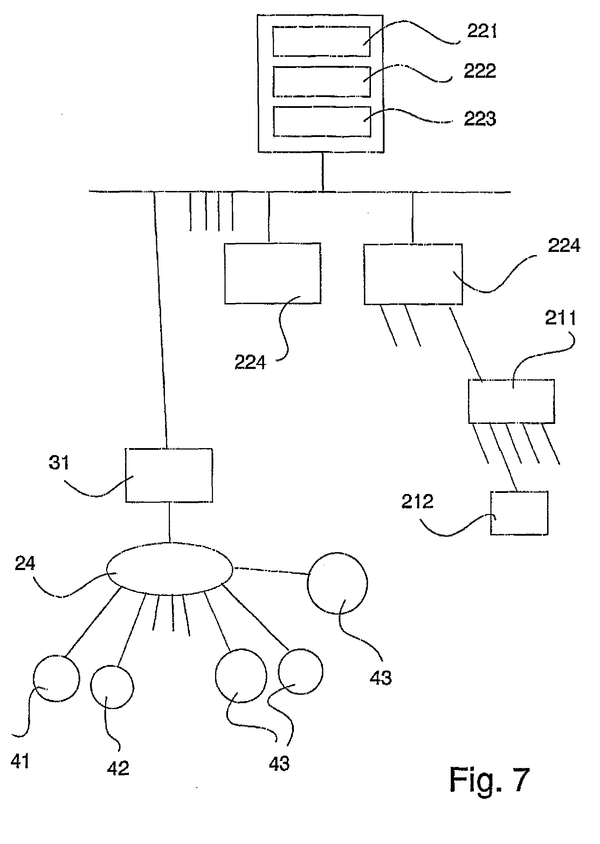

Stage B - a cluster 40 of microcells, are defined as a new cell or an independent LA. There is a larger area covered by that cluster 40, a contour can be defined that is mostly covered by the new microcells. The microcells 413, 423, 433 are generated by the new base stations 41, 42, 43, etc. (see Fig 7 below)

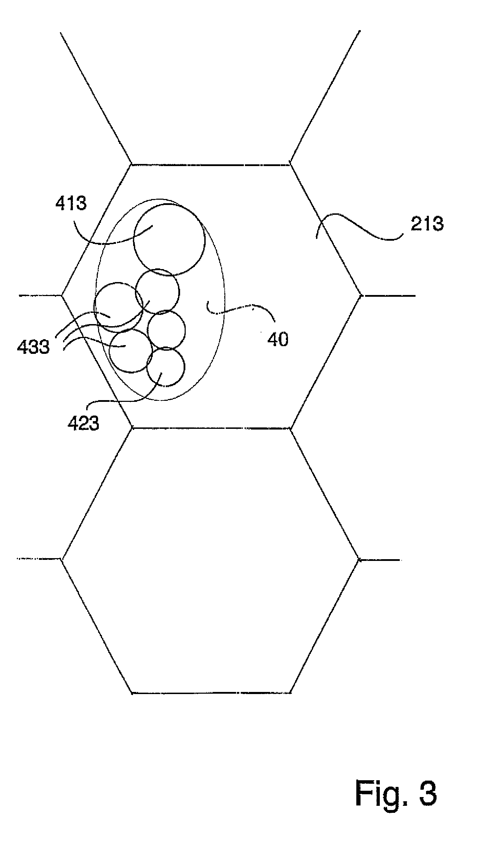

Fig. 3 illustrates the geographical coverage of cells during Stage B-SOLSA.
There are new microcells 413, 423, 433 that are generated within the existing cell 213.
There is a cluster 40 of microcells, that can be defined as a new cell or an independent LA. Solsa may be advantageously used where available.

Stage C - complete coverage of an existing cell with the new microcells

The original cell BS can be disabled, as it is completely replaced with the new microcells. In another embodiment, it is possible to leverage the existing cell coverage by using both large and small cells together, as detailed elsewhere in the present disclosure.

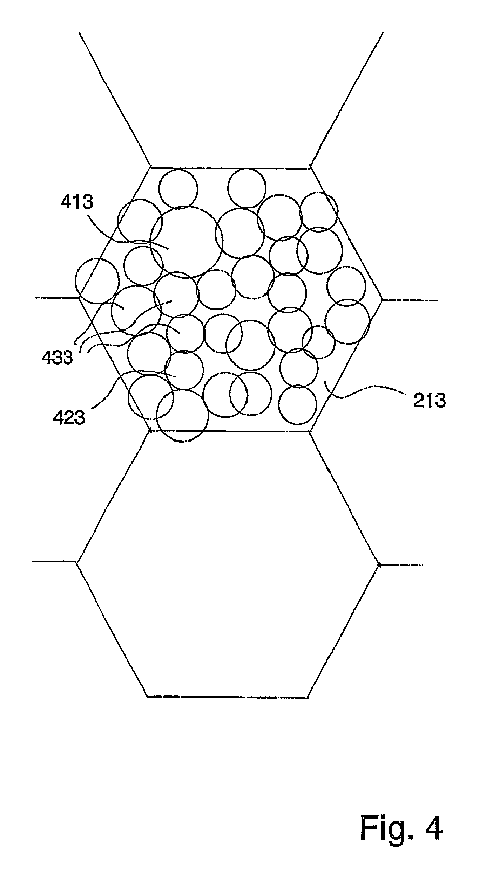

Fig. 4 illustrates the geographical coverage of cells during Stage C. In this stage, new microcells 413, 423, 433 almost completely cover the original cell 213, Thus, the original cell 213 and its BS are no longer required, and can be eliminated, In the new system and method, a large cellular cell can be eventually replaced by the small, randomly located new cells.

Stage C is optional, may never occur - microcells may provide just partial coverage, in coexistence with existing, original cell.

Stage D - layered structure of cells within cells, as a result of the unplanned addition of new microcells.

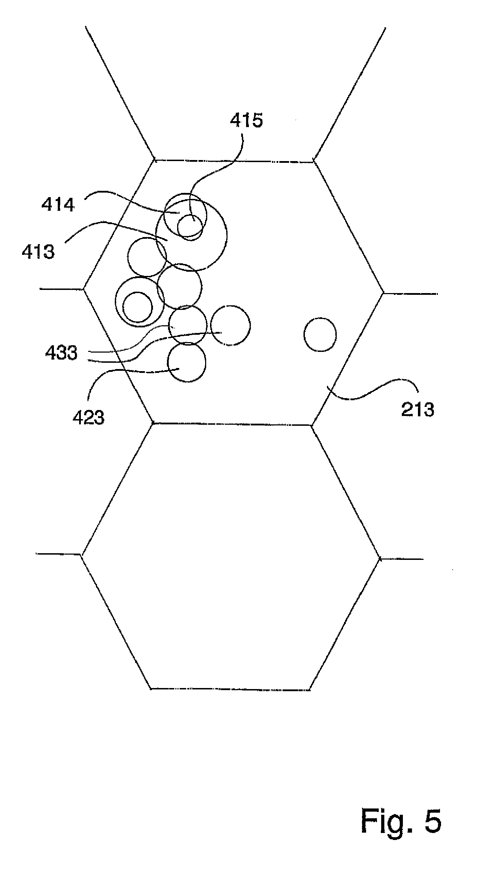

Fig. 5 illustrates the geographical coverage of cells during Stage D. In existing cell 213, there is a plurality of new microcells 413, 423 and 433.

Additional microcell 414 is created within cell 413, and new microcell 415 can be contained within the above microcells, as illustrated.

Stage D is optional.

A system may migrate to here from A, B or C - hierarchical structure of microcells.
A new microcell develops within an existing microcell, as there is demand for still increased capacity.
For example, this situation may develop among a street cell, building cell, floor cell, apartment cell, etc.

Advantages of the abovedetailed gradual migration method:
a. The new concept aims to trigger and to facilitate rapid and extensive "spontaneous deployment of MicroCells" within a cellular network (such as GSM) infrastructure, in regions already covered and serviced by a cellular operator. The outcome of such "spontaneous deployment of MicroCells" is to create a denser array of MicroCells, that improves cellular coverage and increases cellular capacity in the region. This rapid "spontaneous deployment" is to be triggered by a significant reduction in the direct cost of this deployment to the operator that services the area.
b. To achieve a cost reduction according to the present invention, MicroCells are to be possibly purchased and installed in private residences in exchange for incentives to the resident. These incentives might include economic incentives, new services for the resident such as cordless phone without range limit.
   a cut from the revenues that are generated to the operator through the usage of these MicroCells may be transferred to the said purchaser. The MicroCell may use the home facilities, similarly to the way a cordless phone does it.
c. Cost savings to the operators possibly include, among others: Bureaucratics of the deployment, deployment cost, the direct cost of the MicroCell units, the cost of real estate to deploy the MicroCells in, the cost of electricity the equipment uses, the cost of communication to the sites and the cost of maintaining said communication infrastructure.
d. The above costs are either covered by the homeowners or by a different contractor. Some of them may disappear, due to the already existence of adequate infrastructure. For example, a user might already have ADSL or Cable modem already connected to the internet, so he can leverage the communication channel that he already has, or he can utilize unused bandwidth while he is connected(relies on the fact that even while connected the full band- width is rarely used and only part of the time), etc.

Also, such deployment might remove barriers existing to physical deployment which cellular operators face today. Thus, the present invention actually uses existing infrastructure that is wasted today for the benefit of all sides.

What is left for the operator to do is the enhancement and adaptation of the cellular network infrastructure to support the MicroCells and to integrate them with the current system in order to provide joint and seamless service,

Part of this new infrastructure can be deployed and operated by an independent contractor.

The above-mentioned savings and other advantages to the operator and other parties are devised to remove a substantial barrier to rapid propagation of cellular infrastructure

### Practical considerations:

a. The actual connection of the new base stations to the cellular network infrastructure may uses analog modems, cable, ISDN and/or xDSL whose reach to private residences expands and/or other known communication methods. Such cellular infrastructure can evolve "spontaneously", driven by the prospect of incentives of private people, businesses and organizations, and need only to be matched by supporting infrastructure.
b. The new concept allows that no cellular planning take place as to where and when new cells appear and disappear (might happen for example, when a user disconnects his connection), and no report from the installers where and when they do install and operate them.
   This possible business scenario translate into random location, random coverage, random time of appearance and disappearance of cells, and further on into random loads and capacity volumes of traffic and overhead in the supporting network infrastructure.
c. Furthermore, no a priori planning is required for the frequencies used by the MicroCells, an issue of great importance and complexity. This issue is related to issues of coverage, frequency re-use and interference in this limited available spectrum.

The abovementioned complex issues are highly optimized in GSM systems and are carefully planned before the deployment and verified afterwards.

Subscribers, who are serviced in an area covered together by standard GSM cells and MicroCells, are expected to enjoy better reception and transmission quality of cellular services throughout the region than in an area covered only by what an operator deploys. The subscribers are also expected to experience fewer service shortages and service interruptions even in "busy hours" and in less central locations they would experience if serviced only by what the operator deploys. In other words, this would make better use of the spectrum that is available.

Such improvement in the availability of cellular services, major cost reduction, much lower radiation and new services are expected to influence subscribers to use cellular services over more time and more situations than today, which attract cellular operators.

The additional hardware needed for the system and the market demand, may attract cellular equipment manufacturers to support and develop the novel, present system and method.

The technological design, that makes it all feasible, needs to attend to cellular operators' concerns regarding consistent evolvement of their infrastructure with technological advances in the field. The suggested system, therefore, can to designed to offer migration path of the GSM infrastructure to future architectures while gradually replacing the existing components by these of the suggested system.

The business advantage to the operators: acquisition and maintenance of an important part of the infrastructure, for both better coverage and increased capacity is financed by the public, driving rapid growth in consumption of cellular services at much lower direct costs to the operators, the possible reduction or disappearance of bureaurocratic barriers, that may support the fast growth of the network and remove a major burden thereto.

### Underlying concepts.

The present disclosure answers the question of How to make the concept of "spontaneous propagation of MicroCells" technologically feasible. More specifically, it relates to the feasibility of a system designed to support such notion of "spontaneous propagation" and at the same time to be technically and operationally compatible with current cellular (i.e. GSM) system which together provide joint and seamless service to subscribers.

Such a joint service must represent an acceptable solution to cellular operators in terms of costs, operational risks, and compatibility with technological developments and future trends of the cellular world.

Furthermore, a successful attempt has been made to find architectural and technical solution that answers, inter alia, the following requirements:
a. Complete randomness in critical issues of deployment planning, RF compatibility and interference, systems design and service operation that affects coverage, performance, cells and system capacity and load issues (replacing cellular planning with cellular unplanning).
b. Full technical compatibility and smooth joint operation with current GSM architectures and cellular services.
c. Start-to-finish migration path through various interim stages that provides fully operational service at all times and stages, and enables the incorporation of future developments and trends in the field of the cellular services and technologies into the architecture.

### 2. System Implementation

Following is the disclosure of an embodiment of a structure and operation that may be used to implement gradual coverage and migration to new cells, as detailed above.
It details the MicroCell network architectures. The MicroCell network is organized according to several basic architectures; each one is designed to handle a different situation, which appears during the life cycle of the migration from conventional GSM architecture to the final Microcell IP based architecture.

The basic architectures are not exclusive, few and even all can co- exist in different parts of the same network for long durations. It is also possible that they can co-exist in the same part of the network.

Structure and operation- examples of embodiments and the migration path from a few additional microcells (Stage A), to a complete coverage of the area with the new microcells (Stage C), as well as Stage D.

### a. A-configuration during Stage A of cellular system growth

The first basic architecture, A-configuration, is designed to handle the situation in which a GSM cell coverage area surrounds a single MicroCell coverage area. This is the typical scenario for penetration of MicroCells into GSM network.

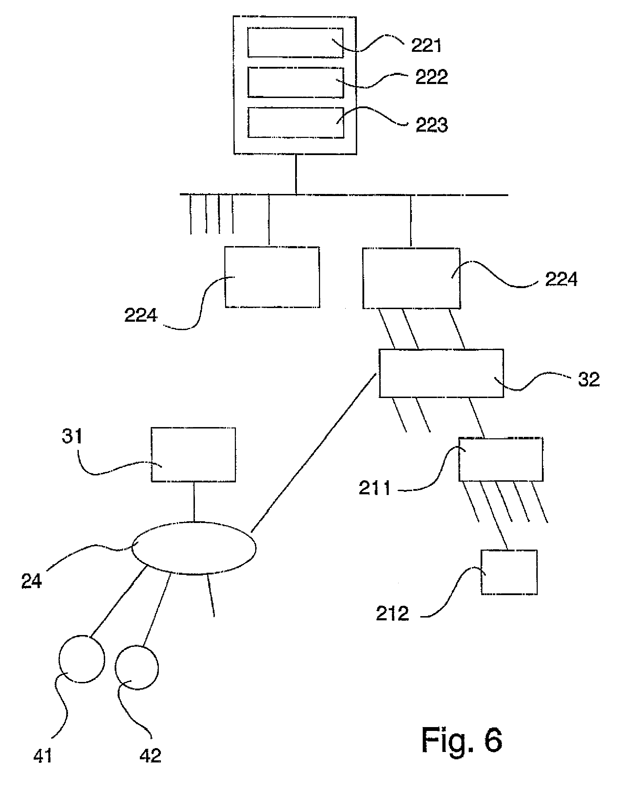

Fig. 6 illustrates the new microcell integration within an existing cellular system during Stage A.
Stage A - a few microcells within an existing cell.
This is the first stage in the migration path, from a few additional microcells (Stage A), to a complete coverage of the area with the new microcells (Stage C).

New base stations 41, 42 (BS) are installed by independent operators to create cells such as cells 413, 423 (see Fig. 1). The new BS are connected to a controller A-MCCIU 31 Central Integration Unit through a network, such as an IP network 24.

The existing cellular network includes a controller with the GMSC 221, HLR 222 and AFU 223 (Additional Functions Unit). This controller is connected to a plurality of units MSC 224. Each MSC 224 in turn can be connected to a plurality of BSC 211 units, each controlling a plurality of BTS 212 devices.

Thus, in Stage A where there are just a few of the new base stations, the connection and integration of a microcell within cellular (GSM) system is preferably implemented at a low level by using units IU1 32 as illustrated.

The actual links for network 24 and connections therewith can be implemented with wire or cable, xDSL, internet, private LAN and/or other means known in the art.

According to the present invention, an interface device, IU1 32, is inserted between the MSG 224 and BSC 211, to facilitate connecting the new base stations 41, 42 to the existing cellular network. Device 32 may comprise an electronic board inserted into the existing equipment there.
Due to the structure of board 32 and its connection to the new net 24, it is possible to connect the new base stations 41, 42, etc. to the existing cellular network.

An important system design consideration in the A- configuration is overhead control in the GSM infrastructure. Movements of subscribers among coverage areas of MicroCells and GSM cells are expected to generate an especially large number of location updates and handovers when they are managed by different control centers.

The situation is equivalent in terms of overhead to spreading one MSC's cells in another MSC's area of coverage, among the second MSC's cells.
The overhead associated with the handling of these processes may overwhelm the GSM infrastructure and reduce its capacity. Therefore, in order to add capacity to a GSM network, it is important to address the overhead control problem, as detailed below.

How the GSM infrastructure views the MicroCell network: The GSM network is not aware of any MicroCell network in the A - configuration.

Switching of MicroCells calls: The calls handled by the MicroCells in A-configuration are preferably switched by the corresponding MSCs, not the A-MCCIU. The GSM system sees the microcell system as an additional (virtual) cell.

### Operation and characteristics

The A-configuration is characterized by small cells, connected to new center over a network (such as the Internet) and also possibly active in wireless - have a radio RF presence.

Cellular system controller supports existing and new structure. Calls may be redirected with optional private center/controller.

Existing cellular system uses beacon transmissions over which it coordinates operation of the mobile phones, whereas the new cell can transmit a beacon only if necessary - if there is no reception of beacon from large base station cell.

This novel structure may require a self-organizing system, capable of providing effective service despite the lack of central planning. It is another objective of the present invention to solve this problem.

### Mechanisms of design of a randomly deployed cellular network

A novel concept of design and operation of a cellular network is hereby introduced. The network is comprised from base stations that are randomly deployed. The system is setf-organizing to include new cells, to allocate frequencies in effective manner, and to provide effective service in spite of the random nature and the lack of planning. The following mechanisms can be used:
a. Location finding of new cells
b. MicroCell architecture
c. Integration architectures (alpha through gamma)
d. Radiation emission control
e. Usage of cable, xDSL, IDSN (Broadband access)
f. Setup of a new MicroCell and frequencies allocation.

### Method for Calls allocation and transfer between systems

When using non-beacon microcells, we want calls that started on the containing cell (either regular GSM or other microcell) to be possibly transferred to the contained microcell.

First, in GSM as an example, the GSM cells initiate all calls. It is proposed that, after a call is established between the GSM cell and the mobile station, the MCCIU instructs the IU1 to plant a false instruction from the MSC to the BSC forcing it to execute a handover of the just established call to the designated MicroCell. Thus achieving what is desired.

The MCCIU can consider additional data before executing such a handover, for example load issues, and perhaps an other microcell has better reception and both requested the call.

If the containing cell is a microcell, things are easier as a microcell might know of non-beacon microcells in its proximity. Also a contained microcell, might ask the containing microcell to transfer a call. The containing microcell might contained cells to receive the call even without them requesting it.

### The handover problem

If small cells are created, then there is the problem of many handovers over a short time period - undesired workload on the cellular system. Worse still, a mobile has to announce its location even if offline, to enable the system to locate it for incoming calls. Inserting new cells into the system of different location area of where they are inserted is what can create the huge number of Location Area Updates.

### Method for effective handover performance

A. A Common Location area is used among microcells and existing cells. According to the present invention, the Location Area (LA) of new microcell is inherited from the Location Area of the surrounding cell. Thus, no location area updates are created when users move between those cells.
B. Location area updates are eliminated within the area, when the system grows, there could be more location areas of microcells, and then the location area updates will be handled by the added system. Thus, the extra load is not handled by the existing system.
C. Handovers that occur between microcells, are handled by the new control, so that the overhead load on the existing system is eliminated.
D. Solsa - also reduces Location area updates.

### b. B-configuration during Stage B of cellular system growth

The second basic configuration is designed to handle a group of MicroCells whose array is dense enough and geometrically situated as to create contiguous area of coverage without the need of being aided by a GSM cell with overlapping area of coverage. In this scenario, movement of subscribers among MicroCells does not generate overhead traffic in the GSM infrastructure. The area should be large enough relative to the contour so there aren't too many handovers and location area updates between the microcell and other GSM network Otherwise a hybrid system can be used (A+B).

Fig. 7 details the new microcell integration within an existing cellular system during Stage B.
Stage B is characterized by a connection at a higher level in the cellular hierarchy, as well as the formation of clusters of microcells, which can be each defined as a new distributed cell or an independent LA.

There is a larger area covered by that cluster, a contour can be defined that is mostly covered by the microcells.

The new base stations 41, 42, 43 are connected with a controller MCCIU 31 through a network, such as the IP network 24.
In the Stage B, the B-MCCIU 31 enlarged, thus adapted for more cells and a connection at higher level in the cellular hierarchy. Here, the B-MCCIU 31 operates at a level with the units MSC 224, and can be directly connected to the unit containing the GMSC 221, HLR 222 and AFU 223.

The cellular system uses the known architecture with units MSC 224 connected each to a plurality of units BSC 211, each connected in turn to a plurality of units BTS 212.

An important design consideration of the B-configuration is to provide exclusive self-contained service in an area by a MicroCell network without loading the GSM infrastructure. The GSM network views the B-configuration as another MSC 224 (GSM switch) and its cells.

Switching of MicroCells calls: The calls handled by the MicroCells in B-configuration are switched by the B-MCCIU and the network, thus adding capacity to the cellular services in the region without adding expensive GSM infrastructure.

The novel approach allows to expand the above network, for example with the addition of new base stations 41, 42 and 43.

The add-on base stations 41, 42 and 43 illustrate three types of additions to a cellular network. These are three ways the public can participate in the network to enhance its capabilities.

Add-on base station 41 allows to connect a mobile user (not shown) to the existing cellular network. The device includes a wireless link with an antenna to connect to a mobile user, and a wired link to connect to an existing communication network. This base station may be owned and operated by an independent person or organization. Once this device, the base station 41, is bought and operated by its owner, it generates a wireless cell in its surroundings.

The device will connect a mobile user in that cell to the telephone network, and to any other network and/or user that may be connected to the cellular network, either directly or indirectly.

Any person or firm or other entity that has a telephone line (a connection to a network) can buy an add-on base station 41 and connect it to the phone line or to other network, to create a new cell in the communication network. Thus, the public, on their own initiative, may add wireless cells to the network.

Thus, the new box achieves the function of a cellular base station in a distributed cellular network. It is also a micro-center for routing calls, as detailed below. The owner of the box connects it to an IP network to expand the existing cellular infrastructure - now a user can connect through the new base station to an Internet, to establish a link with a remote user.

It is assumed that new base stations are connected to an Internet, since it is in widespread use. A user may connect to an Internet in various ways, for example using a telephone line, a cable TV channel, wireless links etc. Other networks can be implemented as well.

In a highly populated area, where there are many phone lines and a numerous population, there is a great probability that many people will buy the novel base stations to generate many new wireless cells.

Thus, new base station 41 adds a new wireless cell in a location where there is available a link to the telephone network (a phone line).

Base station 42 illustrates another type of network enhancement. It connects between Internet and the cellular net. This allows a remote caller (not shown) to place a call to a phone in the neighborhood of base station 42. This saves on long-distance rates.

New base station 43 illustrates yet another type of network enhancement.
It generates a wireless cell that is directly connected to the Internet.

Thus, new base station 43 adds a new wireless cell in a location where there is available a link to Internet.

The system can use the existing infrastructure, for example cable TV, Internet connections and phone networks to provide additional wireless coverage.
The above detailed structure and method may be used for other networks as well. These may include, among others, wireless links, satellite links, cable TV links, fiber-optics or a combination thereof.

Thus, new base stations 41, 42 and 43 allow to use the existing telecommunication infrastructure in developed areas, to enhance the cellular network. Private individuals or firms or other entities that have access to existing communication channels and do not use those channels all the time, may contribute to a cellular network by providing access to those channels.

The novel system includes means to offer an incentive to people, to motivate them to install and operate the base stations. These include means for collecting a payment for services rendered with the base station.

### c. B-Solsa configuration

The B+Solsa configuration is an improvement to the B- configuration that provides better control over the area served by the MicroCell network.

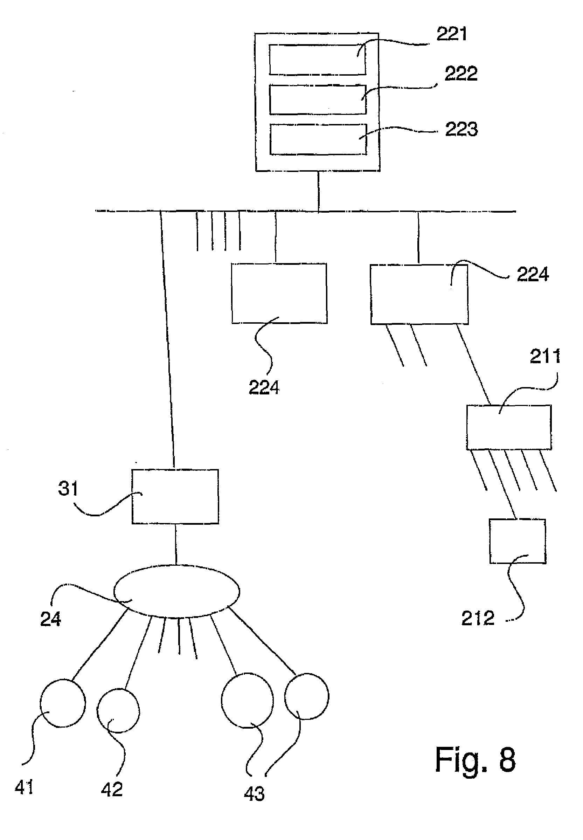

Fig. 8 details the new microcell integration within an existing cellular system during Stage B-SOLSA. SOLSA allows a mobile to stay in location area even if it receives an other location area with stronger reception.

SOLSA allows to refrain from the mobile to create location area update in small areas between microcells that are bettered covered by overlapping cell. The overlapping cell might better cover that area, however, on idle mode it is enough that the area is covered. The chances for a mobile for receiving a call at the precise time when he/she is in this island area is small, and if it occurs, a call will be established anyway. An advantage of the new system and method is that it saves on location area updates for this area, which on the overall benefits the system.

The new base stations 41,42,43 are connected with a controller B- MCCIU 31 through a network, such as the IP network 24.
In the Stage B+Solsa, an enlarged embodiment of the MCCIU 31 is used, that is adapted to serve more cells and a connection at higher level in the cellular hierarchy. Here, the MCCIU 31 operates at a level with the units MSC 224, and can be directly connected to the unit containing the GMSC4 221, HLR 222 and AFU 223. The cellular system uses the known architecture with units MSC 224 connected each to a plurality of units BSC 211, each connected in turn to a plurality of units BTS 212.

The Solsa mechanism is based on a new specification to the GSM network, and it may not always be available See more details elsewhere in the present disclosure.

### d. C-configuration during Stage C of cellular system growth

The C-configuration enables real control over an area (in units of Location Areas) by the MicroCell network by controlling both GSM cells and MicroCells in the area,

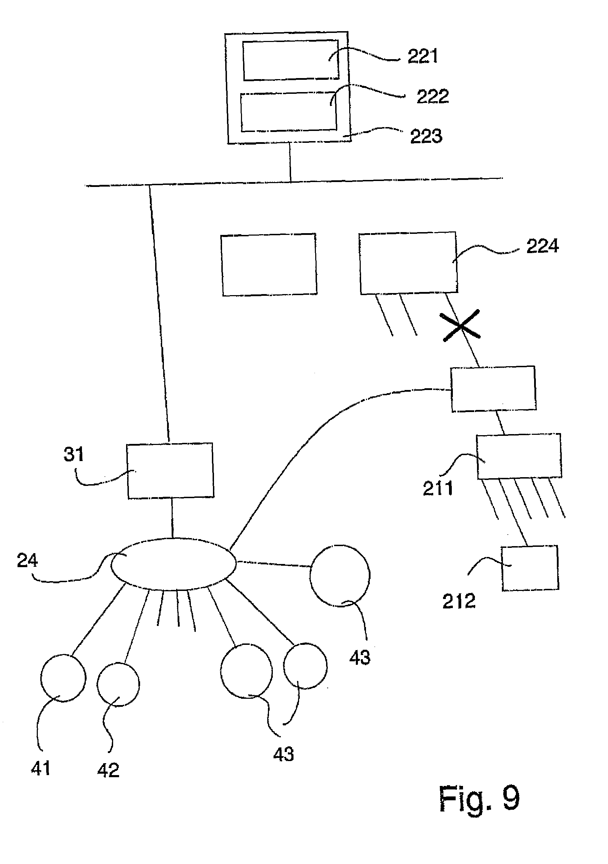

Fig. 9 details the new microcell integration within an existing cellular system during Stage C.

The new base stations 41, 42, 43 are connected with a controller MCCIU 31 through a network, such as the IP network 24.
In Stage C, a further enlarged embodiment of the MCCIU 31 is used, that is adapted to serve more cells, actually all the users in the original cell that is being replaced.

The C-MCCIU 31 operates at a level with the units MSC 224, and can be directly connected to the unit containing the GMSC 221, HLR 222 and AFU 223.

The cellular system uses the known architecture with units MSC 224 connected each to a plurality of units BSC 211, each connected in turn to a plurality of units BTS 212.

The Stage C is characterized in that the new cells 41, 42, 43 completely replace the original cell, thus the original BTS 212 can be disconnected from its MSC 224, as illustrated. Should the cellular operator wish, the BSC 211 or BTS 212 can be connected to the Network 24, and actually be part of the microcell network. This will create even efficient use by the interaction of a large/small cell, and may save communication lines.

The MicroCell network controls directly by emulating an MSC, replacing the MSC which used to control them.

How the GSM infrastructure views the MicroCell network: The GSM infrastructure preferably views the C-MCCIU as a standard MSC.

Switching of MicroCells calls: The calls handled by the MicroCells and the GSM cells under MicroCell network control are switched by the C-MCCIU and the network. In IP network, the switching may actually be IP-switching, and the C-MCCIU acts as control.

### e. D-confiiguration during Stage D of cellular system growth

The D-configuration may develop from either Stage B or C, depending on the density of the new Microcells, The abovedetailed structures apply.

### 3. Methods of operation

Gradual improvement, natural growth adapted to user's needs is implemented, also taking into account the existing cellular network. See stages A to C, D.

Preferably, the new system will maintain compatibility with existing and future mobile stations. The novel structure and method allows mobile stations to communicate on part or all the communication layers with components of a cellular infrastructure, not just with the BTSs.

### Integration with the GSM network in Stage A

The GSM network is partly aware of newly added GSM cells within the control of the existing MSCs and BSCs, it views the system as virtual cells, meaning that the system is deceived to think that it has more cells, and is deceived as to their physical specifics (location of deployment, capacity, frequencies etc.).

The MCCIU together with IU1 group individual MicroCells and represent them as one cell (virtual cell) of a BSC Each of them preferably transmits the same LA identifier as the cell it is in.

Integration with the GSM network in Stages B, C, D - The GSM network is aware of newly added MSC with its corresponding BSCs and cells.

As stated before, there can be a hybrid system in which the system views the microcells as virtual cells, and their total as MSC. The MCCIU is designed to solve any inconsistency that might occur. For example, if MCCIU has a conversation between microcells that is passed through the original MSC, even in A configuration if the mobiles stay in the same area for a long time, it might be expected that they will remain there, and there's no need to keep the original MSC busy in switching the call.

In this case, the MCCIU might want to transfer the entire call to be in the microcell network. It can do this by applying two handovers to each side of the conversation to the MCCIU. In a similar way it is possible to move even one conversation endpoint.

### Method for gradual expansion of a cellular network

The method may comprise the following steps:
A. Creating a plurality of new, smaller cells within an existing, larger cell, wherein each new cell is randomly located;
B. integrating each of the new cells within the existing cellular network by connecting it to the cellular network infrastructure; and
C. giving priority in connecting mobile users through one of the new cells' base stations, by transferring calls from the existing base station to a new base station, whenever possible.
D. coordinating between the new cells for the various required activities, which may include for example:
   * choosing which cell will handle each mobile user;
   * transferring a mobile user between cells.
   * taking over communications with a mobile user from a new cell which
E. deactivating the original base station which covers the existing cell, when the new cells effectively cover the existing cell.

In the above method, the first new cells are preferably connected at a low level in the existing cellular network.

When the new cells cover a significant part of the original cell, in a preferred embodiment the new cells are connected at a high level in the existing cellular network.

The centers 31 further include means for allocating frequencies to new cells such as to minimize interference with the existing cell and between the new cell, and for conditional beacon activation at each new cell, responsive to the state of availability of a beacon from the original base station.

### Finding the Coarse Absolute Location of a MicroCell

A location finding mechanism is added to the MicroCells. The added mechanism utilizes the measurements of the Timing Advance (TA) mechanism of GSM TA serves in GSM to determine the propagation delay of bursts along the path between different mobile stations and the base station. The added mechanism uses multiple delay measurements to produce coarse absolute locations.

The method of operation is as follows:
A. In the location finding phase, the logic of control and processing chip of the MicroCeil configures the MicroCell transmitter and auxiliary receiver # 1 to function as a mobile station.
B. When in this mode, the MicroCell initiates an outgoing call through a GSM cell.
C. Upon the establishment of such a call, the mechanism at the GSM cell determines the Timing Advance (TA) parameter value to be used by the Mobile Station (the MicroCell pretends to be a mobile station) to adjust the timing of its bursts. The value of this parameter is proportional to the distance between the GSM cell and the mobile station.
D. The MicroCell repeats the operation with additional GSM cells and MicroCells and utilizes the received values of TA and the known locations of the cells to calculate its absolute location. The accuracy of the location found by this process may be limited (about 250 meters) due to the limited accuracy of the TA itself. Such accuracy is sufficient for loose array of MicroCells. In case of a dense array of MicroCell, such accuracy is not sufficient and an additional mechanism for accurate relative location finding is used. See next section.
E. The MicroCell logic selects the cells used for TA measurements as described above by setting the camping frequency of the receiver.

### Structure for improving the Relative Location finding

More accurate relative location of MicroCells, needed for dense MicroCell deployment, is found through the use of GPS incorporated in selected units. An improved mechanism for measuring distance between MicroCells is incorporated in MicroCells. The mechanism uses larger bandwidth signals than the standard 200 kHz of the GSM, enabling the TA mechanism with better precision. For example, if a 1 MHz bandwidth is used, then a precision of about 50-60 meters can be achieved.

Other methods of location include: received power of different cells and calculating the interpolation A similar way is for the microcell to transmit beacon frequency to be received by other known cells, so that they can measure their reception strength and estimate the microcell location.

In practice, it might be enough for the installer of the microcell to specify the phone number in the place it is installed, and thus fine-tuning is also available.

### Setup of a new MicroCell

The MicroCell network automatically includes and operates a newly installed MicroCell.

### Method for allocation of frequencies

A. A function of the MicroCells' network operational center fits beacon frequencies to the MicroCells. The allocation function uses measurements results produced by the MicroCells.
B. A MicroCell, equipped with a receiver tuned to the Downlink band, measures the signal level of transmissions at the beacon frequency of the neighboring GSM cells and MicroCells.
C. The received signal levels are analyzed. The allocation function determines which transmissions are weak enough not to become a source of interference in the vicinity of the Microcell
D. The allocation function considers all the frequencies used by the GSM cell, both for beacon and for traffic, to allocate the operating frequency of the MicroCell.
E. The MicroCells in the vicinity of each MicroCell are used to sample the RF magnitude of said MicroCell transmitted power in their locations. Such sampled data may be used to control the transmitted power of the MicroCell in an attempt to control the "MicroCell size".
F. Newly powered-up MicroCell starts its activity by listening to other cells transmissions and passing the collected information to its operational center. The operational center processes the data and allocates a frequency to the new MicroCell. It may also reallocate frequencies to other MicroCells. It also determines the time for the change to take place and the time for the new cell to start transmissions.
G. MicroCells organize their transmissions so that planned intermissions allow them to listen to other cells transmissions. The collected activity is transferred to the operational center of the MicroCell center. If change in frequency allocation is required, the operational center re-allocates the frequencies to the MicroCells.
H. To answer the issue of interference between microcells, The microcell network can use the mobile stations as monitors to the possible interactions. Mobile station is capable of listening to frequencies given by the cell that serves them, and report back the strength of the received signal. Such measurements are designed for handovers, however they can be used to test the interface by microcells. When user location is known, it enables to get valuable information of the RF propagation of each and every microcell.
   This information can be used to help determine the frequency allocation which is best in each moment Microcells can be instructed to conduct "experiments", meaning that they can test frequencies and see how mobile units report the effect.
   The more the microcell is operated, the more it learns its environment through the mobile unit's measurements.
I. Microcells can also monitor dropped calls, as to try to figure out if a certain frequency allocation might cause dropped calls. More microcells, and more calls, mean that the microcells get a clearer and more accurate information about the RF interaction with the environment, allowing them to make better decisions to the frequencies and power of transmission This valuable information is usually not available to common operators.
J. A distributed approach can also assist to lighten the burden of frequency allocation over the center. This is since the microcells have computer power that can analyze the information, so to minimize the computer power needed in the microcell center.

### Location Update in A-configuration

A powered-up mobile station reports its position to the cellular network through the cell the mobile station selects based on the received signal level and the received quality of the broadcast channel in the beacon frequency Further to that, it does not repeat the update as long as it stays within the coverage area of cells belonging to the same location area (LA) as the cell selected to receive the last location update (except for time-based update).

In order to maintain the same concept in an area covered by both GSM cells and MicroCells, the MicroCells identify themselves with the same LA identifier as the surrounding GSM cells (for MicroCells that transmit beacon).

If the subscriber decides to report its position through a MicroCell, the report will be forwarded from the MicroCell to the IU1 and from there to the MSC as if it came from a standard GSM cell.

### Methods for Handling of incoming calls

### a. Paging

Upon receiving an incoming call, the MSC directs the BSCs to transmit paging messages through all the belonging cells to the last known LA of the needed mobile unit. Some of the MicroCells, having beacon transmission, may belong to the same LA as well. In order to transmit paging messages to mobile stations in the coverage area of the said MicroCells, the paging information is intercepted by the IU1 and transferred to the MCCIU. The MCCIU, in turn, directs the relevant MicroCells to transmit the paging messages. To make this process more efficient, IP multicast, or other multicast method can be applied.

### b. Handling of mobile station response to paging in a MicroCell

if the responding mobile station requests channel allocation from a MicroCell, the MicroCell allocates the requested resource (unlike the case of the GSM cells, where the allocation is made by the BSC, not the BTS) and notifies the MSC via the IU1 about the allocation. The MSC considers this activity to be a standard allocation by a GSM cell (Virtual Cell).

All the MicroCells in a given location area which interface through a given IU1 with the MSC, can constitute a Virtual Cell. The MSC recognizes a Virtual Cell as a standard GSM cell.
The MSC makes the connection between the paging request and the channel allocation request of the mobile station and connects the incoming call to the channel allocated to the mobile station. IU1 diverts the path to the MicroCell's network and to the MicroCell that allocated the radio channel to the responding Mobile Station.

### c. Handling of outgoing call through a MicroCell

An outgoing call in GSM is initiated by a mobile station requesting a radio channel from the base station of its choosing through the Random Access Channel. After successful allocation of the radio channel, the MSC is notified by the BSC and a connection to a designated destination is requested. If the cell selected by the mobile station is a MicroCell, the path from the MicroCell to the MSC is connected by the IU1.

As in earlier cases, the MSC recognizes the request for connection as coming from a standard GSM cell (actually Virtual Cell). The Mobile Station always recognizes the MicroCell as standard GSM cell. The rest of the path and processes for call establishment and call routing handled by the network is unchanged.

### Methods for Handovers handling

### a. Pre-synchronization

While engaged in a conversation, the mobile station scans beacon frequencies of neighboring cell in case it will have to switch cells The frequencies to be scanned are provided to the mobile station by the MSC controlling the cell. The MSC is not aware of the actual deployment of the MicroCells and of their beacon frequencies. For this reason, the MCCIU directs the IU 1 to replace the frequency list provided by the MSC by a list that includes frequencies of both GSM cells and MicroCells beacon frequencies in the area.

This procedure is used whether the cell conducting the call is a GSM cell or a MicroCell. The mobile station uses the replaced list to perform pre-synchronization with the neighboring cells. The mobile station measures signal level and reception quality of cell having beacon frequency that is included in the list. The results are averaged and transmitted to the BTS through the SACCH (Slow Associated Control Channel) channel, The information ends up at the BSC that makes the decision whether to switch cells (handover) and to what target cell the call is to be transferred.

### b. Handover between MicroCells

When the cell conducting the call and the target cell for the handover are both MicroCells, the said MicroCells handle the handover by themselves. Each MicroCell includes the BSC logic for handover decision algorithm and selection of the target cell. In addition each MicroCell connects through the MicroCell's IP network directly to the target MicroCell without involving the MCCIU. Only when the handover is successfully completed, the MCCIU is notified.

If both MicroCells belong to the same Virtual Cell, the MSC is not even notified of the handover. If the MicroCells involved in the handover belong to the different Virtual Cells, there are two different cases: if they belong to the same BSC, but to different LAs, the MSC is notified upon completion of the handover.

If they belong to different BSCs, the MSC is made to feel that it connected the two BSCs for the execution of the handover.

### c. Handover from GSM cell to a MicroCell controlled by the same MSC in different BSCs

When the BSC of a GSM cell decides to hand a call over to another cell not under its control, it requests the MSC to connect it with the BSC of the target cell. When the target cell is a MicroCell, the IU1 intercepts the MSC message to the target BSC's Virtual Cell and together with the MCCIU it generates a message to the actual MicroCell. From this point on the GSM BSC communicates with the MicroCell through the IU1 unaware of the fact that this is not a standard GSM BSC. When the handover is concluded the MSC and the MCCIU are notified.

### d. Handover from a MicroCell to a GSM cell controlled by the same MSC in different BSCs

When a MicroCell decides to hand a call over to a GSM cell, it requests the MSC using the IU1 to connect it with the BSC of the target cell. From this point on the MicroCell communicates with the target BSC through the IU1 in the usual exchange of messages as exists between two standard GSM BSCs. When the handover is concluded the MSC and the MCCIU are notified.

### e. Other handover cases

Other cases are handled according to the same principles.

### Data exchange with the cellular infrastructure

The contents of the exchanges between the mobile stations and the infrastructure is adapted to the way the current (prior art) cellular system operates and the sources of operational information, for example:
a. Mobile stations scan beacon frequencies while engaged in a voice conversation in case they will have to switch cells.
b. The list of frequencies is sent to the mobile stations from the MSC The MSC prepares the information based on the ground deployment of the cells in the vicinity of the serving cell and the allocation of beacon frequency of the cells.
c. This information is available to the MSC as the output of the planning and operation teams.

In the novel method of operation there is no need to plan the location of the new cells. Great flexibility and adaptability is achieved.
The current (existing) infrastructure will not be aware of the new cells so there is no need to support them in any effective and consistent way Otherwise, should the current infrastructure be required to support the newly deployed MicroCells, its capacity would have to be enhanced dramatically at a very high cost, a definite disadvantage.

### Migration path details

The abovedetailed new architectural approach offers a migration plan into the future that will allow continuation, will be economically justified and fully operational at all phases.
The migration plan will allow the operator to choose the right time for every change in its infrastructure.

Therefore, the migration path is well founded and fully conceived, from the installation of the first MicroCell to the final state of all the components of the system, although it may be modified in the process.
Further issues relating to the migration path are detailed below:

### a. Solution for the RF issues

Locating cells and allocating frequencies to cells is a complex engineering planning task, aimed at optimizing the use of RF resources and equipment to get maximum coverage and capacity, This task is complemented by drive-tests and in-system recordings of errors, unsuccessful connection trials, system loads etc. to further tune the system.

In the novel system, no planning is mandatory. The task is to make an operational system out of the chaotic nature of the deployment, using an adaptive approach.

The locations of a newly installed MicroCell can be discovered, and operating frequencies can be allocated, either automatically and/or by a decision of an operator.

As MicroCells multiply, each MicroCell might have to transmit all the time at beacon frequency, even though its capacity may be minimal Numerous MicroCells in a region create background interference that serve no call and may interfere with actual calls.

In one embodiment of the invention, the MicroCells have to transmit continuously at the beacon frequency. Usually, the MicroCell are installed indoors. Although the transmission power of the MicroCells may be the same as of a mobile station, the RF power emitted by a MicroCell is emitted for longer periods of time.

Moreover, in idle mode, the mobile station emits practically no power while the MicroCell is emitting full power regardless of the traffic it handles.

### b. Solution for the joint coverage issue

GSM is designed to centrally manage its services in a given region. All the planning of deployment and frequency allocation is done outside the system and all the operational data are fed into the infrastructure to be used.

In prior art cellular, if a second operator is also covering the same region, it is allocated a different band of frequencies. The subscriber can choose the operator. The service is exclusive; either the subscriber uses one operator or the other.

In the new MicroCells system, however, the situation is possibly different. There could be one service, made up of the joint coverage of two systems This setup is not consistent with the basic view of the GSM specifications. The major conceptual and practical difficulties stem from the fact that deviation from the grouping of cells as dictated by the GSM specifications is necessary while maintaining compatibility with the GSM system.

The closest concept of joint coverage is the enterprise cellular subsystems. This is a limited and straightforward sub-case of our solution as is explained elsewhere in the present disclosure. Still, for its implementation, a change in the GSM standard was required (Solsa).

The most difficult and also the most common case in the MicroCell scenario is to have a MicroCell surrounded by area having better coverage by a GSM standard cell rather than by other MicroCells. The reasons for the commonalty of this situation are:
1) MicroCells will pop up in unknown positions, having limited coverage while the GSM cells cover much larger areas and are carefully located to achieve together the maximum coverage. So it's simple probability to expect it.
2) Even when numerous MicroCells are present in a small area, it is very difficult to create a continuum of coverage. This is because of the limited coverage that each of the Microcells provides combined with the effect of urban landscape that make coverage by MicroCells very irregular and still combined with the randomness of the geometry of the MicroCells locations. For these reasons, a GSM cell usually covers significant part of the area among MicroCells.

This case presents a difficult problem as subscribers move mainly between Microcells and GSM cells, generating very heavy overhead load on both systems. The GSM system is certainly unable to cope with the extra load. Apparently, prior art systems offer no solution to this basic case. The solutions presented here solve it.

### c. Robust operation

Robust operation is achieved in the new system. For example, a microcell may be active or not, for various reasons - its owner may close it down, there is a technical problem and repairs are required, etc. In any case - the system detects the problem and recovers from it: it redirects existing calls with that microcell to others, that may be listening or to the large cell; will not direct future calls to the inactive cell.

When a microcell becomes active, it may announce its availability to the net- to its microcell neighbors or their controller, and/or the original cellular system controller. Then - calls may be redirected to it, of its own initiative or at the other's demand.

When a microcell becomes inactive, it is important to perform handovers of calls that are going through that microcell. In case of a sudden deactivation of a new base station (for example due to power failure), according to the present invention, another cell or cells are designated to watch on this cell's operation and to take over when necessary.

### 4. New Microcell Structure

A new microcell may be used to implement the abovedetailed system and method for a cellular network development.

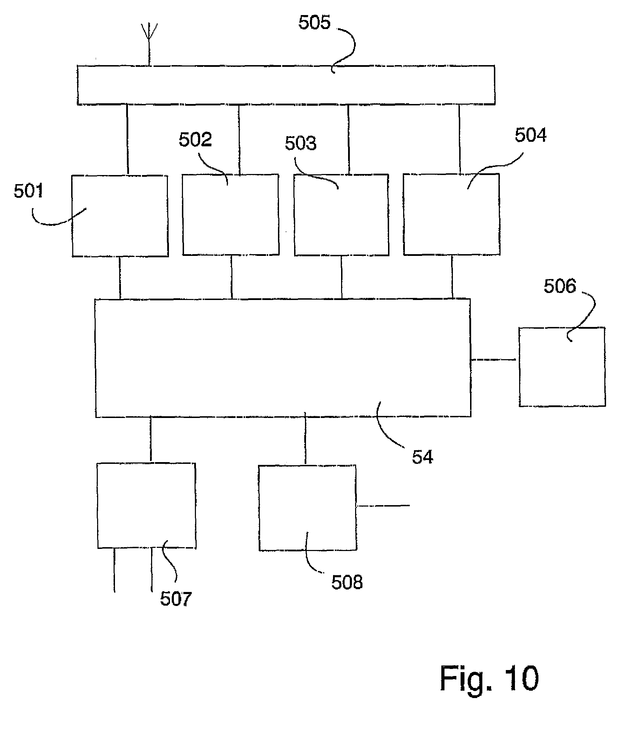

Fig. 10 details one embodiment of the structure and operation of a new microcell base station.
The new structure includes a new base station with transmitters, receivers and controller means for implementing the required functions.

The new base station includes a first receiver 501 and a transmitter 502, for implementing a link with mobile phones.

Preferably, downlink transmitter 502 is capable of producing up to 300 mW peak power at 100% duty cycle. The MicroCell transmission power level is around 200-300mW (power levels that are transmitted by mobile stations).

Uplink receiver and synthesizer 501 can be coupled with the Downlink transmitter 502 to form the RF section of the TRU.

First Auxiliary receiver 503 and an optional synthesizer are used to operate in the downlink frequency band.

Second Auxiliary receiver 504 and optional synthesizer are used to operate in the uplink frequency band.

Antenna assembly 505 is connected to the abovedetailed transmitters and receivers. The system may further include a GPS receiver 506 or other location finding means, as well as user interface 507, that is input/output means.

A wireline link interface 508 can be used, such as LAN, Internet, cable, etc. It can be implemented, for example, with cable modem or xDSL, modem chipset. There can be a possible interface to the local phone line, to support services like unlimited range cordless phone. This phone line and microcell will serve as the base station, and all outgoing calls of the user's (or other) phones will go through that phone-line, Other services might be gateway station for far users, in order to cut long-distance rates.

The operation of the base station is controlled with controller 54, that can be implemented as a custom designed control and/or a processing chip to integrate all of the sub assemblies.

Not shown: power pack including battery, AC power supply, etc., and case. The transmitter, receivers and synthesizers implementation can use known and accepted technologies in cellular, to provide a compact, lightweight design.

Using controller 54 and the abovedetailed structure, the MicroCell is capable of listening to GSM cells and to Microcells on the frequency band in which GSM cells transmit.

MicroCells use the Location Area identifier of the GSM cells in their vicinity. They learn it by listening to their transmissions, or as assigned by the MCCIU.

The MicroCell uses IP protocol to connect to the MicroCell Central Integration Unit (MCCIU) and to other MicroCells.

The MicroCell includes its BSC.

An untrained user can install the Microcell, due to its automatic and adaptive operation.

The MicroCell holds in its memory in controller 54 the IP addresses of the other MicroCelis in the area Thus it can handle handover between MicroCells without involving the MCCIU 31.

The MicroCell's physical characteristics (location, beacon frequency etc.) can be made invisible to the GSM network. This saves unnecessary workload on the original cellular network.

The abovedetailed structure is modular and upgradeable all the way up from Configuration A to C or D. This will allow the connection and integration of a microcell within cellular (GSM) system at various levels, as detailed above.

The new base station for microcell thus includes means for its addition to an existing cellular network by independent operator. Its capability to listen to its surroundings using its receivers, together with the smart controller 54, provide the necessary means for its adaptive operation as well as means for creating smaller cells within an existing cell. The new base station can thus coexist and cooperate with an existing cellular system.

The controller 54 further includes means for smart beacon transmission control, for improved adaptability. Radiation emission control is implemented using methods detailed elsewhere in the present disclosure.

Existing, prior art cellular system has beacon over which it coordinates operation of mobiles. In the new cells, the BS transmits a beacon only if necessary, for example: if no reception of beacon from large base station cell. The system might have other considerations when asking a microcell to transmit beacon, or not.

The new base station uses a novel beaconless MicroCell that may emit no radiation when not sending data. The mechanism for doing so is based on a mixture of cells having beacons that cover large areas and MicroCells in the same areas that have to use no beacons. The MicroCells coverage is more limited than the coverage of the cells having beacons and they are installed closer to humans, even indoors. It might be also used to cluster several microcells to form a virtual distributed cell. Microcells that cover a certain area can take turns with who carries the beacon frequency, and distribute the calls among them.

### Emission Control of Microcell Base Station

At present, the GSM architecture requires that a cell base station will transmit beacon frequency on a constant basis. This requirement stems from short time intervals implemented in the mobile station for measuring signal level in beacon frequencies when in active mode - handling a call, as part of the Handover pre-synchronization, and also to locate phones when they have an incoming call.

In case the base station is comprised of a single TRU (Transmitter Receiver Unit), the applicable case for MicroCell, the broadcast channel as well as the traffic channels are transmitted on the beacon radio frequency. In every one of the 8 TDMA time-slots, either normal or dummy bursts are transmitted.

This transmission can generate an average transmit power, which is eight times higher than that produced by a mobile station. It should be noted that mobile stations do not radiate in idle mode while the base station radiates at full power at all times.

Another aspect, specific to transmission by cells of single TRU, whether GSM cells or MicroCells, is the constant power of transmission regardless of reception quality. The power control mechanism cannot be applied here to optimize the power because of the need for comparison of signal levels from different cells by the MicroCells engaged in pre-synchronization.

### The novel system

To minimize the radiation by the MicroCell, and to achieve additional benefits, its structure includes the following features:
a. In an area covered satisfactorily by both GSM cell and a MicroCell (or enough microcells), the MicroCell will not transmit in beacon frequency for reasons other than to conduct a call, e.g., when no call is handled by the MicroCell, it does not emit any radiation.
b. The MicroCell includes two auxiliary receivers. Auxiliary receiver # 1, is tuned to receive the GSM cells' broadcast channel on the beacon frequency. Auxiliary receiver # 2 is tuned dynamically to the uplink traffic channel frequency of a mobile station whose value is included in a message from the GSM cell to the mobile station and was also received by auxiliary receiver # 1.
c. The GSM cells initiate all calls. After a call is established between the GSM cell and the mobile station, the MCCIU instructs the IU1 to plant a false instruction from the MSC to the BSC forcing it to execute a handover of the just established call to the designated MicroCell.

Method of operation of the system: Microcells that receive that mobile station, request the handover, and the MCCIU chooses the one to "win", This enables handover to stations without beacon. Other monitoring and request of calls can also be applied.

### The new MCCIU 31 unit

Following is a description of the new MCCIU 31 (MicroCell Central Integration Unit), see Figs, 6, 7, 8 and 9 The MCCIU is a central component of the MicroCell network. The MCCIU uses the operational information (cell location, frequencies allocation, etc.) of both MicroCell and GSM systems.

It also controls integrated operations between the systems, being the only component with the full picture of both the GSM and the MicroCell system deployment It correlates the operational model of both systems by directing and affecting the activities of all the other components.

The MCCIU is preferably invisible to the GSM network. In one embodiment, an MCCIU is recognized by the GSM network as another standard MSC.

The new system does not need a plurality of large switchboards to make all the required connections. In prior art systems, as the number of cells increases, the number and complexity of switchboards increases as well. There is a large number of concurrent calls that have to be supported. This adds to the cost of setting up and operating a cellular network.

The new system, however, uses the switchboards in the existing infrastructure for call switching or IP-Routing rather than switches, Therefore, there is no need to add costly switchboards. The new structure is implemented with the MCCIU 31 and the IU1 32, see also below.

There is a need for a coordination center that issues information relating to completing a call as required. Alternately, a plurality of centers may be used. These centers only provide information prior to a call, and do not take part in the actual link being formed. This novel feature may help reduce the investment required to install or expand a cellular network.

The MCCIU 31 centers store information for each base station, including the telephone number used by that station. This information may be advantageously used to generate new links, to help one user to locate an IP base close to the desired destination.

In one embodiment of a billing method, the centers 31 are also responsible for price setting, as determined by an operator there. The information regarding prices of use of the net and the additional, private base stations, is disseminated as digital documents encrypted so as to prevent tampering with.

The centers 31 are also responsible for tracking down malfunctions in the cellular network. If a base station would not respond or would not operate correctly, that information is brought to the attention of the center by related parties. The center will disseminate that information, to help user form communication links with reliable channels and base stations only.

The new centers may initiate calls to the various base stations, to verify their correct operation. Thus, the new cellular centers correlate and guide the operation of the users in the net, in real time.

Usually, a link will be formed with one switchboard at the source (the person who initiated the call) and a switchboard at the destination. Additional switchboards are usually needed in between the above switchboards. These are existing switchboards, that are part of the existing infrastructure.

The new center 31 coordinates the operation of the new base stations like 41 and 43 as illustrated.

The duties of the cellular centers 31 include, among others:
a) Network integration and planning
b) Implementing a price policy.
c) Network operability.
d) Manager of phone locator. (In case of incoming calls).

### Detailed description:

a) The Cellular center 3 knows the current physical location of all add-on base stations, and is aware of the status of each base station (i.e. is available or not available, optionally processing a call etc.).
b) The cellular center is possibly responsible for the price policy. It determines and publishes the cost for each operation over the network. The updated information may be transferred over an Internet, or may be available to add-on base stations.
   The information may be dispersed between units in the network. In each transaction, the parties thereto will check the date of each price list. The more updated price list will be transferred to the other party.
   Thus, the new price list or policy will gradually expand throughout the network.
c) The cellular center is responsible to actively check, once in a while, the availability of base stations and their operability (see if they work properly).
d) One of the main tasks of the cellular center is to give the function: when given a "cellular phone number", it is able to return the IP address of a base station, that has radio contact with it. Alternately, it may return a message that the phone is in the "out of coverage area".

### Billing

The new system and method provides means for paying to the owner of the add-on base station for his/her services. This provides the incentive for acquiring and operating these base stations.

Encrypted sessions can be used The base station includes means for accepting a payment and for displaying to the user information relating to the payments received.

Using encryption and digital documents, it is possible to reliably implement the payment method as detailed, while protecting from impostors or others who may present false payment means, This may help prevent stealing of calls, that is a problem in present systems.

Further means to prevent calls stealing is the caller ID and destination ID. That is, in the novel system both the identity of the caller and the destination may be known. This may prevent or intimidate a potential thief, who may know that his actions will be recorded and detected.

A possible method of billing is by way of money or tokens.
Digital documents may be used that correspond to cash money or to a credit or right to use the network at someone's expense, or may represent phone tokens having a specific monetary value each.
These documents may be encrypted or signed so as to allow the owner of the base station to receive payment for services rendered.

The phone may download tokens or money from the center or from a plastic card or a smart card or by other means. These payment means may be stored in the phone for subsequent use.

When originating a call, or otherwise as stated in the cellular center policy, the phone would send tokens to the base stations in the way to the other phone. In this way he pays for the session on - line and in real time. The center can profit since for a certain amount of money it will give a certain amount of tokens (and take its profit).

Base stations receive payment, and can later redeem the tokens from the cellular center back to money, or receive new tokens for their owner instead, for the owner's use in his/her communications over their cellular phone.

### The new lU1 32 unit

Following is a description of the structure and operation of a new IU1 32 (Interface Unit 1) see Figs. 6, 7, 8 and 9.

An IU1 can plug in between a MSC and a BSC. It monitors and intercepts control traffic between them, pass requested information to the MGGIU and replaces information in the MSC-BSC link according to the MCCIU instructions.

The GSM network needs not be aware of the IU1 existence.
The units IU1 operate in coordination with the MCCIU 31.

### The links to the MicroCells and IU1s

IP protocol over the internet or dedicated channel (over cable, xDSL, ISDN) is preferably used to get to each customer's house (the last segment).

A leased line or path through the public Internet (VPN) can be used to get from the MicroCell's networks central site to a PSTN switch or to a cable CMTS (first segment).

Each MicroCell and IU1 preferably has an IP address.

### d. The network

The network uses an IP-based network, using VolP modified. The modification is due to the nature of the dedicated links and to the compression schemes needed for cellular transmissions.
Some VOlP schemes may already today support this kind of operation.

Routers in the central site of the MicroCell network can interface to the communication lines to the MicroCells enabling connection between MicroCells without loading the MCCIU.

### e. Solsa

Solsa is a mechanism lately specified to enable operators to restrict mobile stations to specific cells irrespective of the presence of other cells. It is designed to help setting up and operating enterprise cellular network in an area already covered by public cellular network.

Our design can use this feature to improve control over an area in B-configuration, leading to B'-configuration, see above.

Thus, it is possible to install or expand a cellular network without the need for a large investment in infrastructure Rather, the new network is based on the existing infrastructure, for example a telephone network, a wireless network, Internet or a combination thereof.

Cellular systems are easier to install in sparsely populated areas It is more difficult to install cellular- base stations in towns or other highly populated areas, where there are the problems cited above. The present invention helps solving the problem of cellular installation and achieves best performance in the densely populated areas that were difficult to address in the past.

The very population that may have opposed to the cellular net, are now helping the setting up of the new cellular network. According to the new concept, small cells are thus created in cities or other populated areas.

The maintenance cost is greatly reduced. The system operator is no longer responsible for the maintenance of a multitude of base stations located in a highly populated urban area. Rather, each owner of a private base station is interested to keep his/her equipment in working order. If there is a problem, the owner will see to repairs or a replacement. In a preferred embodiment, simple and low cost base stations are used, that are expendable - when a malfunction is detected in a base station, the unit is discarded and replaced with a new one.

The new add-on base station, together with the system and method for its effective integration in the existing cellular system, can help achieve a more cost-effective, gradual expansion of cellular networks.

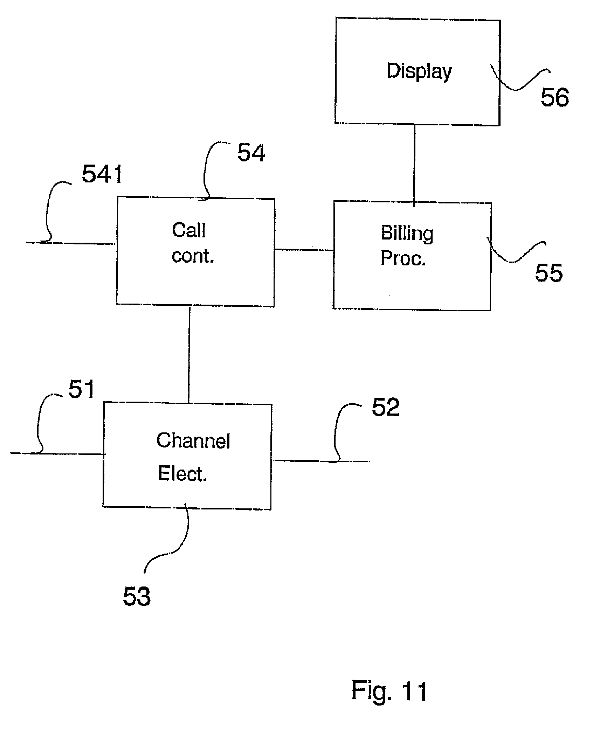

Fig. 11 details, by way of example, the functional structure of a novel base station (such as add-on base station 41, 42 or 43 of Fig. 7). A basic function of the station is to connect a first channel 51 with a second channel 52. Either channel may be wired or wireless, using various technologies.

The channel electronic means 53 implements the actual communications to connect between the channels 51 and 52, A call controller 54 supervises and controls the operation of means 53, according to commands received from a user through the control inputs 541 for the base station, A billing processor 55 computes the fee or payment the base station owner is entitled to, according to the amount of traffic on the channels 51, 52, and the method or policy as set in the billing document.

As more communication services are provided to the public, the owner of the base station will receive a larger fee accordingly. A display 56 may be used to display the payment due or payment received for the calls placed by other users.

Each base station may include a unique identity or property. This unique property may be stored, for example, in either the call controller 54 or the billing processor 55 , or on a SIM card.

This unique property allows to use the base station as an add-on device. In prior art, each phone had an unique identity, however the base stations had no unique properties. Each base station in prior art was distinguished based on its fixed location and wiring; there were no distinguishing means in the base station itself.

The base stations are add-on units, to be added to a network by various persons or firms The location of each such unit is not known a priori; its very existence has to be announced to the network. A base station with an unique identity allows the network to keep track of the addition of each new base station. The unique identity helps manage the expanding network.

The unique identity of each add-on base station may be achieved, for example, with an unique number being stored in memory means in units 54 or 55. Alternately, a digital document may be stored therein. A smart card with an unique number or document may be inserted in the base station to activate it

A plurality of users may be served using wideband channels having the capability to serve several users at once. For example, channel 51 may be a wireless channel capable of communicating with several users using TDMA or FDMA or CDMA. Channel 52 may be an Internet connection capable of connecting to several destinations simultaneously. More than two channels may be used. This may allow a base station to concurrently communicate with more users and/or networks.

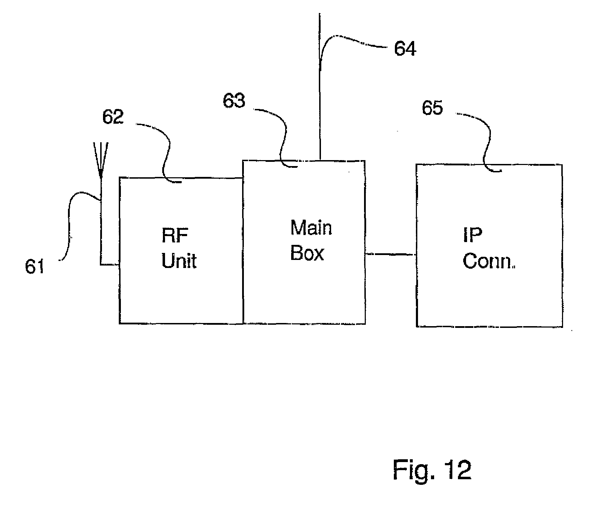

Fig. 12 details another embodiment of the base station. The RF channel includes an antenna 61 and an RF unit 62 The main box 63 includes the electronics for connecting the RF channel to the phone line connection 64 and the IP connection 65. The phone line connection 64 is optional. An add-on base station may only include the RF channel (to connect to a mobile user in a cellular wireless system) and the IP connection 65. The base station may also be connected to an optional source of electrical power.

The add-on base station may include the following components:
a) Main box
b) IP connection
c) antenna
d) phone line connection

Some of the above components may be optional, as required for the desired function as an add-on to a cellular network.

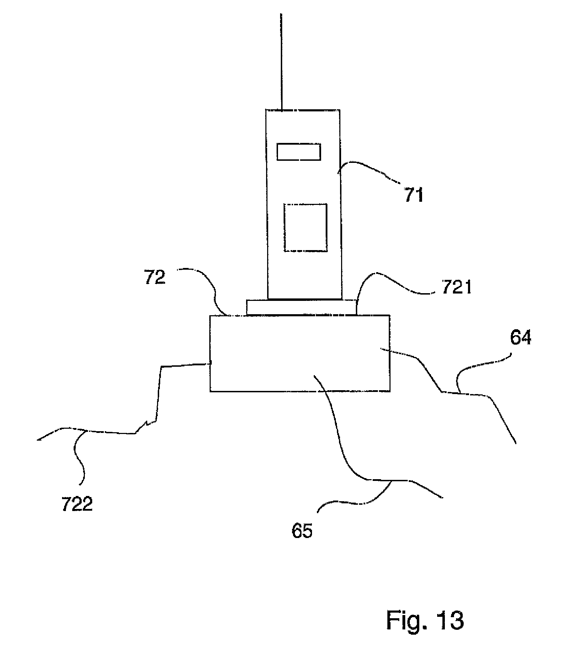

Fig. 13 illustrates a possible embodiment of the physical structure of the new add-on base station, including a cellular phone 71 and a base 72. A connector 721 is used to connect the two devices.
The owner may use the cellular phone as usual, to communicate as desired.
When not in use, he/she may insert the phone 71 into the base 72 to form a base station: the phone 71 communicates with mobile users, and the base 72 is connected to wired networks through a phone line connection 64 and/or an IP connection 65. The device may further include mains power connection 722.

This system requires a modified phone, that has a capability to operate as a base station, both in transmit and receive modes. In cellular systems, the mobile phones transmit in a first frequency band and receive in a second frequency band, whereas the base station transmits in the second frequency band and receives in the first band.

The phone 71 includes means for transmitting and receiving in the way used by base stations when it acts as a relay station.

Moreover, the phone 71 further includes means for transmitting and receiving control signals as required in a cellular network, to establish a communication link with a mobile phone and control that communication. The control signals may include, for example, power control, link establishment and disconnection. The control signals are specific to each cellular network like GSM, AMPS, CDMA etc.

The phone 71 may include means for performing one cellular link at a time, or it may include means for communicating at once with several mobile phones, in the latter case, it will function as a base station for several mobile phones located in its surroundings.

The above description refers to one embodiment, where the RF link is implemented with a modified cellular phone 71.
In another embodiment (see Figs 11 and 12), no cellular phone is used to implement the RF link with other phones. Rather, a complete base station includes all the RF transmit and receive means to allow it to communicate with a mobile cellular phone. The base station may include means to allow it to concurrently communicate with several mobile phones.

Furthermore, the base station may include means for charging a battery in the cellular phone. Thus, as the phone is inserted in the base, its battery is charged and concurrently the phone may be also used to expand a cellular network.

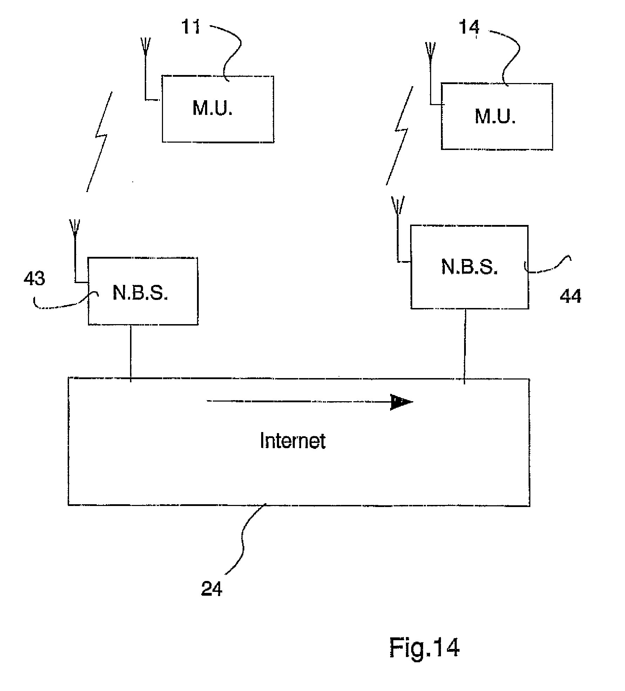

Fig. 14 details a cellular to cellular link. A link may be established between a first (mobile) user 11 and a second (mobile) user 14. User 11 communicates with new base station 43, that is connected to an lnternet network 24.

User 14, who is located in another area, communicates with new base station 44, that is also connected to an Internet network 24.
Thus, a communication link is established between users 11 and 14 through the IP network 24. This is a low cost, fast link.

### A call processing method.

Following is detailed a method for conducting a cellular to cellular call over the network.
A. The phone 11 which is initiating the call, is accessing the nearest base station 43 by means of radio communication.
   It identifies and requests a (voice) connection to the other phone number 14 The number may be either en clair or encrypted.
B. The base station 43 then contacts the cellular center 31 asking the IP address of the nearest station 44 to the destination phone number 14.
C. There are several possibilities:
   C1. The cellular center 31 returns an answer, that the destination is not available.
      In this case either the base station 43 is notifying the requesting phone 11 of the situation, or the center returns an alternate IP address. The alternate IP address can be the destination voice mail, or a recorded message, for example: "The phone you have reached is not available right now, please try later." Or a gateway address to other system. It is also possible that the IP indicates a link to advanced services, such as "follow me" etc.
   C2 The destination is available. In this case, it is possible that the return answer would come either directly from the base station 44 that is in contact with the phone 14, or be returned by the center 31.

In case an IP was returned, the base station 42 contacts the destination station over the network , and "calls" the phone 14. If the phone 14 is taken off the hook, then packets of voice are exchanged between the base stations, and are forwarded from and to the phones 11 and 14, so that a phone session is established.

In case the phone 14 refused the call, the originator base station 43 can try to locate the phone again through the center, or ask to see if there is a voice mail IP from the center. The phone 14 refusing the call can also state another IP or number where it may be contacted, or a voice mail.

To preserve the privacy of the addressee, the phone 14 may ask the center notto disclose its refusal. Rather, the center may announce the caller that the addressee is not available.

### Moving between cells (add-on base stations)

Let us assume that a mobile phone has a link with a first base station. It may happen, during the conversation, that the phone detects that it receives the first base station at a low power, that is at a power lower than a predefined threshold.

In that case, a program in the phone may run a background search for an alternate base station. If it finds a second base station at a higher received power, then the phone will ask it to continue the call.
It will send packets from the new station, and try to inform the old station of the change Alternately, the new base station can inform the old base station of the transfer of the call to it.

The other party's base station is informed by the phone or by the base station of the new IP address of new base station.

Thus the link is disconnected from the first base station and a new connection is established with the second base station, to improve the quality of the link. It is assumed that a higher received power indicates a link with an improved communication quality.

### Locating base stations

After a base station was bought by a person or entity, a stage of activating the base station is to be performed. The device is activated when it is connected to and integrated within the cellular network.

The location of base station can be made known to the cellular center 31 using various methods. Several ways are detailed below by way of example.
1. During the registration of a base station, the person that registers the base station would state its location.
2. If the base station is connected to a phone line, its location can be found automatically from the number it is connected to
3. The station can "listen" to transmissions from other base stations nearby (whose location is already known), and forward the information regarding the identity of received base stations and the power level of each such reception to the cellular center Using this information, the cellular center can estimate the location of the new base station.
4. Nearby stations (which are already known in the system) can listen to a beacon or transmission from the new station and thus its location can be estimated.
5. A GPS device (with or without earth radio corrections) can be inserted into the base-stations, so that it would know and report its location,
6. Other specific methods as listed elsewhere in the present disclosure.

### Method for locating the destination base IP

There are several methods to locate a phone,
1. This can be done in a similar fashion to what is done at present Since the cellular center knows the location of base stations, it can start a search for the phone from the last place it was known to be.
2. Otherwise, the phone could be "paged" over paging channels, and the phone would reply to the nearest base station, and this reply would be forwarded by that base station to the cellular center.
3. A phone may be required to send a beacon once in a while to the nearest base station, so that the center may know its location.
4. The network may be divided into geographical zones. A city may be a zone, for example. The phone may be required to announce the center when it crosses the boundaries of zones (Location Areas).

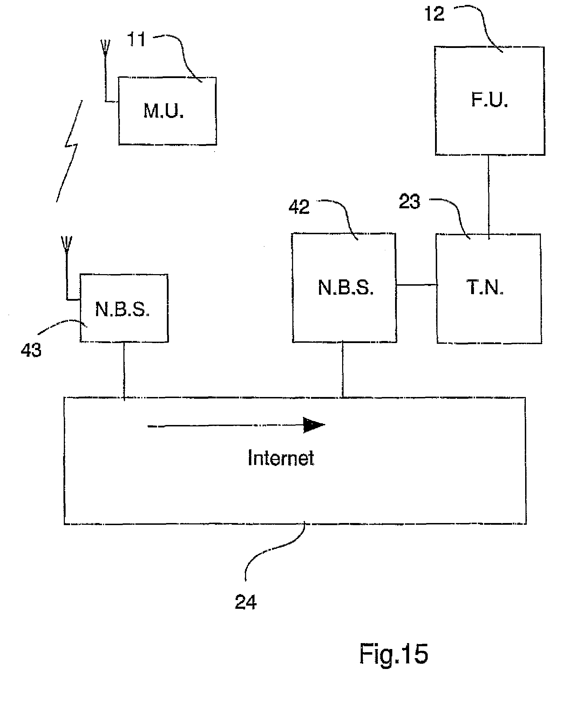

Fig. 15 details a cellular to regular phone link.
A link is established between a first (mobile) user 11 and a second (fixed) user 12, User 11 communicates with new base station 43, that is connected to an Internet network 24.

User 12, who is located in another area, is connected to the existing telephone network 23.

A new base station 42 connects (bridges) between an Internet network 24 and the existing telephone network 23, wherein the point of entry to the telephone network 23 is preferably in a location close to that of user 12, so as to achieve a local, or low cost, phone link. Thus, base station 42 achieves a low cost connection between users 11 and 12.

A cellular center may direct user 11 to a base station that is close to the call destination (to user 12).

Another way is to use other gateways, such as GMSC in GSM.

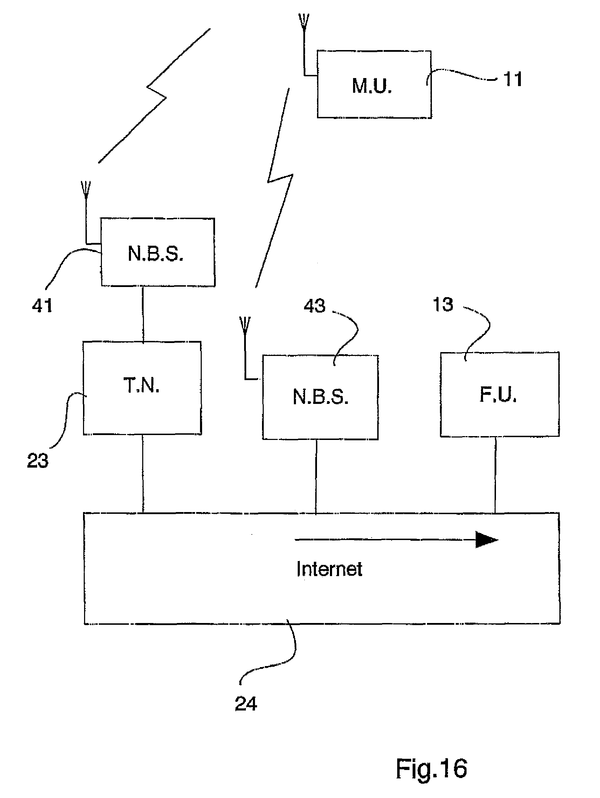

Fig. 16 details a link to an IP phone. A first (mobile) user 11 may connect to a second (fixed IP phone) user 13.

User 11 may connect either through base station 41 or base station 43. The new base station 43 is directly connected to an Internet network 24. The new base station 41 connects (bridges) between the cellular user 11 and the existing telephone network 23, which is connected to Internet 24.

### A call processing method - from an IP phone

Since calls are already over the IP network, people may prefer to use the IP network as their main phone network. Special apparatus could be made to play the part of base station and phones, all in a regular phones case.

Otherwise, this may be done with PCs with software and with or without hardware (possibly a smart card - to do all the black box part).

Communication to/from an IP phone is the same as regular cellular phones, if implemented in this way, and can also be as outside phones which contact a base station that agreed to act as an IP gateway.

### The beacon transmit problem and its solution

ln prior art there is a problem with the transmit power. The problem is solved with the new structure and method, as detailed in the present disclosure.
The present invention aims to put a multitude of base stations in private homes. This can be done, for example, with a cellular phone that performs the functions of a small base station.

The problem that arises is that, in order to function as a base station, a cellular- phone needs to transmit a higher average power. People may be reluctant to take home a device with a higher RF radiation. Moreover, higher cost components may be required to transmit at a higher average power, This may hinder the proliferation of the new base stations that are installed in people's homes.

The technical reason for the above problem is that a cellular phone transmits only in one slot, therefore the radiated average power can be much lower than the peak transmit power. For example, in GSM a cellular phone may transmit with a duty cycle of 12.5% (one of eight time slots). Thus, if the peak power is 2 Watt for example, then the average radiated power is 0.25 Watt.

If the same phone is required to function as a base station, it has to transmit a beacon continuously, in GSM for example. Thus, the average power becomes 2 Watt (an eightfold increase).
This demand may be intolerable.

Using a novel approach, the present inventor solved the problem with a new system and method:
1. A basic assumption is that the new small cells will operate in an area which is already serviced by a cellular system. Moreover, the new cells will use services provided by that existing cell.
2. The new base station has an additional receiver for monitoring the beacon channel, to determine whether the existing cell provides a beacon for that area, that is in the vicinity of the new base station.
3. If a mobile requires service and the existing cell provides the required beacon in that area, then the new base station will not transmit a beacon at all, Rather, the new base station and the mobile phone will use the beacon signal transmitted by the existing cell's base station.
   When a mobile requires to establish a communications link, the new base station will make the required connection, thus replacing the existing base station for that task.
   Thus, the transmit power problem is solved in this case, since the new base station will not transmit a beacon at all.
4. If a mobile requires service and the existing cell cannot provide the required beacon in that area, then the new base station will transmit a beacon only for the duration of that phone call.
   When a mobile requires to establish a communications link, the new base station will make the required connection, thus replacing the existing base station for that task.

Thus, transmit power problem is solved in this case, since the new base station will only transmit a beacon during phone calls, not all the time.

The above method can be implemented with the new structure, which includes a second receiver for monitoring the reception of the beacon signal from the existing base station. A new base station includes two auxiliary receivers. Auxiliary receiver # 1 is tuned to receive the GSM cells' broadcast channel on the beacon frequency, and can be used in the above method. The new base station also includes a controller 54, which includes means for implementing the above method for average power reduction in the new base station.

A dynamic response is achieved, since the beacon may be received sometimes, and not be received at other times. The new system and method allows to only transmit a beacon signal when necessary from the new base station.
This significantly reduces the average power transmitted by the new base station.

### The beacon transmit sharing problem and its solution

There is yet another problem relating to the beacon transmission, a problem that apparently has not been anticipated nor solved in prior art.

In the new microcells system and method, new cells can be installed and activated in a sporadic fashion, without a priori planning or coordination When there is no beacon signal available from the existing base station, one of the new cells will start sending that beacon signal.

There are possible problems at the system level with this novel concept. One problem is unequal division of the load among cells: One new base station will transmit a beacon continuously for prolonged time periods, thus exposing the inhabitants there to a large dose of RF radiation, whereas other base stations will not transmit at all.

Another problem is that two or more new base stations, each sensing the lack of a beacon, will concurrently start transmitting a beacon. Then all may stop it together, as each of them senses that others are transmitting, An effect akin to the "deadly embrace" in computer networks may occur.

Using a novel approach, the present inventor solved the problem. Following are two possible embodiments of a system and method for beacon transmission coordination among the new base stations.

### Solution 1 - Centralized control

1. The new base stations are connected to a computer that coordinates their operation. This is the MCCIU, a novel central computer and switching controller. MCCIU stands for Micro Cell Central Integration Unit.
   See for example the controller A-MCCIU 31 Central integration Unit, Fig. 6.
2. Each of the new base stations includes means for communicating with the MCCIU through a network, such as an IP network 24, see Fig. 6
3. When new base stations detect that there is no beacon signal in their vicinity, they transmit reports with the related information to the MCCIU.
4. Upon receiving these reports, the MCCIU forms a situation picture, indicative of the area with lack of a beacon.
5. A beacon covering strategy is decided upon, designating base stations that are to transmit the beacon signal. The relevant information is send to the new base stations in that area.
   For example, base stations A, B, C, D, E, F and G are designated to transmit a beacon, each for a specific time period, for example 5 minutes.
6. The designated base stations transmit the beacon signal, each in its designated time period. As each base station transmits only for part of the time, the duty cycle is greatly reduced and the average power is reduced as well.
7. If possible, the number of participating base stations is increased, thus further reducing the duty cycle and the average transmit power for each base station.
8. The beacon reception status is updated continuously, since it is possible that there is a temporary interruption in the signal from the original base station When the signal from the original (old) base station returns, the new base stations cease transmitting the beacon signal. This further reduces the average power transmitted by the new base stations.

### Solution 2 - Distributed control

1. Each of the new base stations includes means for communicating with the other base stations, using for example a local network or the Internet.
   They also include a controller for implementing this beacon transmission coordination method.
2. When a new base station detects that there is no beacon signal in its vicinity, it transmits a report with the related information to nearby base stations.
3. Upon receiving these reports, the controllers in these base stations form a situation picture, indicative of the area with lack of a beacon.
4. A beacon covering strategy is decided upon, designating base stations that are to transmit the beacon signal. The relevant information is send to the new base stations in that area.
   For example, base stations A, B, C, D, E, F and G are designated to transmit a beacon, each for a specific time period, for example 5 minutes.
5. The designated base stations transmit the beacon signal, each in its designated time period. As each base station transmits only for part of the time, the duty cycle is greatly reduced and the average power is reduced as well.
6. If possible, the number of participating base stations is increased, thus further reducing the duty cycle and the average transmit power for each base station.
7. The beacon reception status is updated continuously, since it is possible that there is a temporary interruption in the signal from the original base station. When the signal from the original (old) base station returns, the new base stations cease transmitting the beacon signal. This further reduces the average power transmitted by the new base stations.

Other uses of new technology - although the new technology has been illustrated with GSM applications, it is to be understood that the various aspects of the invention, as detailed in the present disclosure, can be also applied to any cellular telephone network, cellular broadcasting, etc. Although the new invention has been illustrated using an embodiment applied to GSM, it is to be understood that various applications are possible.

It will be recognized that the foregoing is but one example of an apparatus and method within the scope of the present invention and that various modifications will occur to those skilled in the art upon reading the disclosure set forth hereinbefore.

## Claims

1. In a cellular network system, an interface unit comprising a first interface functionally connected with at least one management element of the cellular network, a second interface functionally connected to the public internet and adapted to provide authorized entities, while they are connected to the Internet, access to one or more cellular network services.

2. The interface unit according to claim 1, wherein said management element is a base station controller.

3. The interface unit according to claim 1, wherein said management element is a mobile switching center.

4. The interface unit according to claim 1, wherein said management element is a High-level control.

5. The interface unit according to claim 1, wherein said authorized entities are add-on base stations.

6. The interface unit according to claim 1, wherein said authorized entities are handsets connected to add-one base stations.

7. The interface unit according to claim 1, wherein said authorized entities are Personal Computers.

8. The interface unit according to claim 1, wherein said authorized entities are Personal Computers adapted to use a smart card for authorization.

9. The interface unit according to claim 1, wherein said cellular network services include placing voice conversations from the authorized entities to cellular phones functionally connected to the cellular network.

10. The interface unit according to claim 1, wherein said cellular network services include receiving voice conversations to the authorized entities from cellular phones functionally connected to the cellular network.

11. The interface unit according to claim 1, wherein said cellular network services include placing voice conversations to phones connected to a fixed telephone network, by having the cellular network forward the call through a gateway (for example, GMSC in GSM) to the fixed telephone network.

12. The interface unit according to claim 1, wherein said cellular network services include receiving voice conversations to the authorized entities, where the voice conversations originate in the fixed telephone network and are forwarded by the cellular network to the authorized entities.

13. The interface unit according to claim 1, wherein said authorized entities are authorized using a Subscriber Identity Module (SIM) card.
